# EUROPEAN PATENT APPLICATION

(11) **EP 4 462 905 A1**
(43) Date of publication of application: **13.11.2024**
(21) Application number: 22917866.0
(22) Date of filing: 07.01.2022
(51) Int. Cl.: H04W 72/04

(54) **SYSTEM INFORMATION PROVIDING METHOD AND APPARATUS**

(71) Applicant: FUJITSU LIMITED, Kawasaki-shi, Kanagawa 211-8588 (JP)
(72) Inventor: JIA, Meiyi, Beijing 100022 (CN); LU, Yang, Beijing 100022 (CN); WANG, Xin, Beijing 100022 (CN)
(74) Representative: Haseltine Lake Kempner LLP
(86) International application number: PCT/CN2022/070846
(87) International publication number: WO 2023/130394

(57) **Abstract**

Embodiments of this disclosure provide a method and apparatus for providing system information. The method is applicable to a network device and includes: when a first condition is satisfied, transmitting system information in a dedicated manner to a terminal equipment satisfying the first condition, the first condition including that the terminal equipment is receiving downlink data from a dedicated channel of a non-serving cell, or cell information with which an active TCI state(s) for downlink channel reception of the terminal equipment is associated is different from cell information of a serving cell.

## Description

### Technical Field

This disclosure relates to the field of communication technologies.

### Background

Rel-15 NR includes some MIMO (multiple input multiple output) features to promote use of a large number of antenna elements at frequency bands below and above 6GHz at a base station side.

Rel-16 NR enhances Rel-15 NR by introducing enhanced Type II codebooks based on discrete Fourier transform (DFT) compression, supporting multiple transmission reception points (TRP) transmission, especially for an enhanced mobile broadband (eMBB) and a physical downlink shared channel (PDSCH), enhancement of multi-beam operations, including reduction of measurement reconfiguration overhead related to latency and/or multiple quasi-colocation (QCL), secondary cell (SCell) beam failure recovery (BFR), a L1-SINR, a peak-to-average power ratio (PAPR) reference signal, and ensuring characteristics of uplink full power transmission.

NR is currently in a process of commercialization, and from actual deployment scenarios, various aspects that need to be further enhanced can be identified, such as inter-cell beam management (ICBM), including:
Rel-16 has managed to reduce overhead and/or latency, and high-speed vehicle scenarios on FR2 (such as terminal equipments traveling at high speeds on highways) require more active reduction of latency and overhead, not only for intra-cell but also for inter-cell L1 and L2 layer mobility, which further includes reducing occurrence of beam failure events;
Rel-16 studied enhancement of ensuring panel-specific uplink (UL) beam selection, but did not have enough time to complete the work. This provides some possibilities for increasing uplink coverage, including alleviating uplink coverage losses caused by satisfying a maximum permissible exposure (MPE) rule;
channels other than a PDSCH can benefit from multi-TRP transmission (as well as multi-panel reception), which also includes inter-cell multi-TRP operations. This includes some new multi-TRP use cases, such as scenarios of uplink dense deployment within a macro cell and/or deployment of heterogeneous network types;
due to the use of multi-scenario SRSs, at least for capacity and coverage, it is possible and necessary to further enhance the channel sounding reference signals (SRSs);
although Rel-16 supports enhanced Type II channel state information (CSI), some rooms for further enhancement may be sensed. This includes utilization of CSI and some heterogeneities of channel statistics designed for multi-TRP/panel for NC-JT use cases, such as angles and latency, with a major goal of deployment of FR1 frequency division duplex (FDD).

Therefore, Rel-17 NR defines further enhancement of NR MIMO, including enhancement of multi-beam operations, with a major goal of FR2, which is also applicable to FR1, including:
1) for intra-cell and inter-cell scenarios, determining and defining characteristics that promote more efficient (lower latency and overhead) downlink/uplink (DL/UL) beam management, so as to support higher terminal equipment speeds and/or more configured transmission configuration indication (TCI) states, which are as follows:
   common beams for downlink and uplink, data and control transmission/reception, especially for intra-band carrier aggregation (intra-band CA);
   a unified TCI architecture for downlink and uplink beam indications;
   enhancement of a signaling mechanism of the above characteristics improves latency and efficiency by more use of dynamical control signaling (relative to RRC);
   for provision of system information, a terminal equipment only transmits to or receives from a single cell (i.e. a serving cell remains unchanged when beam selection is completed). This includes L1-only measurement/report (i.e. no L3 impact) and a cell-associated beam indication of any physical cell identity (PCI), wherein the beam indication is based on a unified TCI architecture of Rel-17; reuse of beam measurement/reporting mechanism with identical inter-cell mTRPs; and intra-distribution unit (intra-DU) and intra-frequency situations are only taken into account.
2) taking mitigating the uplink coverage losses caused by the MPE, determining and defining characteristics that promote uplink beam selection for a terminal equipment equipped with multiple panels, and using a unified TCI architecture selected by the uplink fast panel based on the uplink beam indication.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

System information includes a master information block (MIB) and some system information blocks (SIBs), and is divided into minimum system information (minimum SI) and other system information (other SI).

The minimum system information includes basic information needed in initial access and information for obtaining other system information, and may include an MIB and SIB1.

The MIB includes cell-barred state information and basic cell physical layer information needed in receiving more system information, such as CORESET#0 configuration, and is broadcast periodically on a broadcast channel (BCH).

SIB1 defines scheduling of other system information blocks, including information needed in initial access, which is also referred to as remaining minimum SI (RMSI), and is periodically broadcast on a downlink shared channel (DL-SCH) or transmitted in a dedicated manner on a DL-SCH to a terminal equipment in an RRC connected state.

The other system information includes all SIBs that are not broadcast in the minimum system information, and may be periodically broadcast on the DL-SCH, or broadcast on demand on a DL-SCH upon request by a terminal equipment in an RRC idle state (RRC IDLE) or an RRC inactive state (RRC INACTIVE) or an RRC connected state (RRC CONNECTED), or transmitted in a dedicated manner on a DL-SCH to a terminal equipment in an RRC connected state upon request by the terminal equipment in the RRC connected state (if it is configured by network), or when an active BWP of the terminal equipment does not configure a common search space.

For the terminal equipment in the RRC connected state (if it is configured by network), a request of one piece of the other system information may be transmitted in a dedicated manner (i.e. via an uplink dedicated control channel (UL-DCCH)) to the network, and a granularity of the request is one SIB. A network device may make response to an RRC reconfiguration message (*RRCReconfiguration*) including requested SIB(s), and the network device determines which requested SIBs are transmitted in a dedicated or broadcast manner.

Paging allows the network to reach the terminal equipment in the RRC idle state (RRC IDLE) and RRC inactive state (RRC INACTIVE) via paging, and allows the network to notify terminal equipments in an RRC idle state (RRC IDLE), an RRC inactive state (RRC INACTIVE) and an RRC connected state (RRC CONNECTED) of system information changes and earthquake and tsunami warning system (ETWS) and commercial mobile alert system (CMAS) indications via short messages. The paging and short messages are addressed as a P-RNTI (paging RNT) on a physical downlink control channel (PDCCH), wherein the paging is transmitted on a paging control channel (PCCH), and short messages are transmitted directly via the PDCCH.

When the terminal equipment is in the RRC connected state, in order that the system changes the indications and the public warning system (PWS) notifications, the terminal equipment monitors the paging channel in any paging occasion (PO) notified in the system information.

It was found by the inventors that based on existing techniques, the system information may be provided to the terminal equipment in the connected state in a periodic broadcast or dedicated manner. When the terminal equipment requests or if an active BWP of the terminal equipment does not configure a common search space, SIB1 and other system information may be transmitted in a dedicated manner on a DL-SCH to the terminal equipment in the connected state.

However, for inter-cell beam management, when a terminal equipment receives downlink data on a dedicated channel by using a beam or a transmission reception point (TRP) and a physical cell ID (PCI) associated with the beam or TRP is different from a physical cell ID of a serving cell, the terminal equipment will not be able to simultaneously receive a short message and system information from a beam or TRP of the serving cell. This may possibly cause the terminal equipment to miss updated system information and public alarm system (PWS) information, resulting in that a serving cell is unable to provide services to the terminal equipment, and even the terminal equipment is unable to receive emergency information, such as earthquakes, and tsunamis, etc.

In order to solve one or more of the above problems, embodiments of this disclosure provide a method and apparatus for providing system information.

According to a first aspect of the embodiments of this disclosure, there is provided an apparatus for providing system information, applicable to a network device, the apparatus including: a first transmitting unit configured to, when a first condition is satisfied, transmit system information in a dedicated manner to a terminal equipment satisfying the first condition, the first condition including that the terminal equipment is receiving downlink data from a dedicated channel of a non-serving cell, or cell information with which an active TCI state(s) for downlink channel reception of the terminal equipment is associated is different from cell information of a serving cell.

According to a second aspect of the embodiments of this disclosure, there is provided a network device, including the apparatus as described in the first aspect of the embodiments of this disclosure.

According to a third aspect of the embodiments of this disclosure, there is provided a communication system, including the network device as described in the second aspect of the embodiments of this disclosure and a terminal equipment.

According to a fourth aspect of the embodiments of this disclosure, there is provided a method for providing system information, applicable to a network device, the method including: when a first condition is satisfied, transmitting system information in a dedicated manner to a terminal equipment satisfying the first condition, the first condition including that the terminal equipment is receiving downlink data from a dedicated channel of a non-serving cell, or cell information with which an active TCI state(s) for downlink channel reception of the terminal equipment is associated is different from cell information of a serving cell.

According to a fifth aspect of the embodiments of this disclosure, there is provided a computer readable program, which, when executed in an apparatus for providing system information or a network device, will cause the apparatus for providing system information or the network device to carry out the method for providing system information described in the fourth aspect of the embodiments of this disclosure.

According to a sixth aspect of the embodiments of this disclosure, there is provided a computer readable medium, including a computer readable program code, which will cause an apparatus for providing system information or a network device to carry out the method for providing system information described in the fourth aspect of the embodiments of this disclosure.

An advantage of the embodiments of this disclosure exists in that when the terminal equipment is receiving the downlink data from the dedicated channel of the non-serving cell, or cell information with which the active TCI state is associated received by the downlink channel of the terminal equipment is different from the cell information of the serving cell, the system information is transmitted in a dedicated manner to the terminal equipment. Hence, the terminal equipment is able to obtain the system information from the serving cell in time from the beam or TRP of the non-serving cell, the serving cell is able to normally provide services to the terminal equipment, and the terminal equipment is able to acquire alarm information and take countermeasures, thereby avoiding personal and property losses.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of an embodiment of this disclosure;
FIG. 2 is a schematic diagram of providing system information by a network device;
FIG. 3 is a schematic diagram of a scenario of inter-cell beam management of an embodiment of this disclosure;
FIG. 4 is a schematic diagram of a scenario of inter-cell multi-TRP of an embodiment of this disclosure;
FIG. 5 is a schematic diagram of the method for providing system information of embodiment 1 of this disclosure;
FIG. 6 is a schematic diagram of the method for providing system information of embodiment 2 of this disclosure;
FIG. 7 is another schematic diagram of the method for providing system information of embodiment 2 of this disclosure;
FIG. 8 is a schematic diagram of providing system information by a network device of embodiment 2 of this disclosure;
FIG. 9 is another schematic diagram of providing system information by the network device of embodiment 2 of this disclosure;
FIG. 10 is a further schematic diagram of providing system information by the network device of embodiment 2 of this disclosure;
FIG. 11 is a schematic diagram of the apparatus for providing system information of embodiment 3 of this disclosure; and
FIG. 12 is a block diagram of a systematic structure of the network device of embodiment 4 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "according to" should be understood as "at least partially according to", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and New Radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or a donor in an IAB architecture, a base station (BS), an access point (AP), a transmission reception point (TRP), a broadcast transmitter, a mobile management entity (MME), a gateway, a server, a radio network controller (RNC), and a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal equipment" refers to, for example, an equipment accessing to a communication network and receiving network services via a network device. The terminal equipment may be fixed or mobile, and may also be referred to as a mobile station (MS), a terminal, a subscriber station (SS), an access terminal (AT), and an access terminal (AT), etc., such as a terminal equipment under an IAB architecture served by an IAB node or an IAB donor.

Wherein, he terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when...", "in a case where...", "for a case where..." and "if..." denote one or some conditions or states, and furthermore, all of these expressions are interchangeable.

Scenarios of the embodiments of this disclosure shall be described below by way of examples; however, this disclosure is not limited thereto.

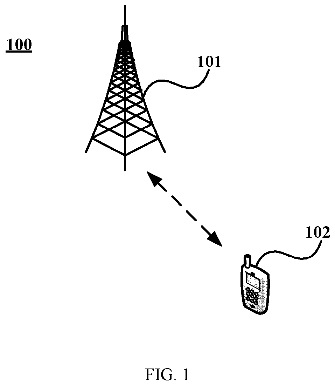

FIG. 1 is a schematic diagram of a communication system of an embodiment of this disclosure, in which a case where a terminal equipment and a network device are taken as examples is schematically shown. As shown in FIG. 1, a communication system 100 may include a network device 101 and a terminal equipment 102. For the sake of simplicity, an example having only one terminal equipment is schematically given in FIG. 1. The network device 101, for example, is a network device gNB of NR. The gNB may include a gNB CU and one or more gNB DUs, wherein the gNB CUs/DUs have some functions of the gNB and are logical nodes of the gNB. A gNB DU can support one or more cells, and one cell is only supported by one gNB DU.

In the embodiments of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC), etc.

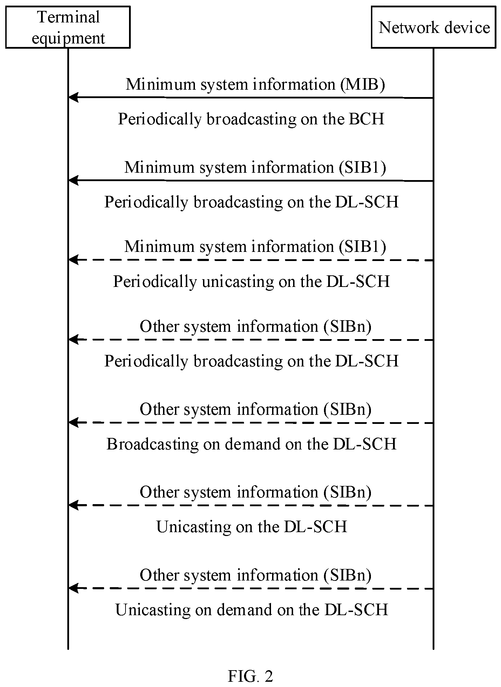

For example, the network device 101 provides system information to the terminal equipment 102. FIG. 2 is a schematic diagram of providing system information by the network device. As shown in FIG. 2, the network device periodically broadcasts an MIB in minimum system information on a BCH, periodically broadcasts SIB 1 in the minimum system information on a DL-SCH, and furthermore, for example, it may unicast SIB1 in the minimum system information on the DL-SCH, periodically broadcasts SIBn in other system information on the DL-SCH, broadcast on-demand SIBn on the DL-SCH, unicast SIBn on the DL-SCH, and unicast on-demand SIBn on the DL-SCH.

In the embodiments of this disclosure, the terminal equipment 102 may use beams on cells other than a serving cell (non-serving cells) to perform communications. Scenarios of the embodiments of this disclosure shall be described below in detail.

For example, for a scenario of inter-cell beam management, the network device 101 provides services to the terminal equipment 102 via the serving cell and a cell other than the serving cell, that is, a non-serving cell provides services to the terminal equipment 102, both the serving cell and the non-serving cell belonging to identical distribution unit (DU) of network device 101.

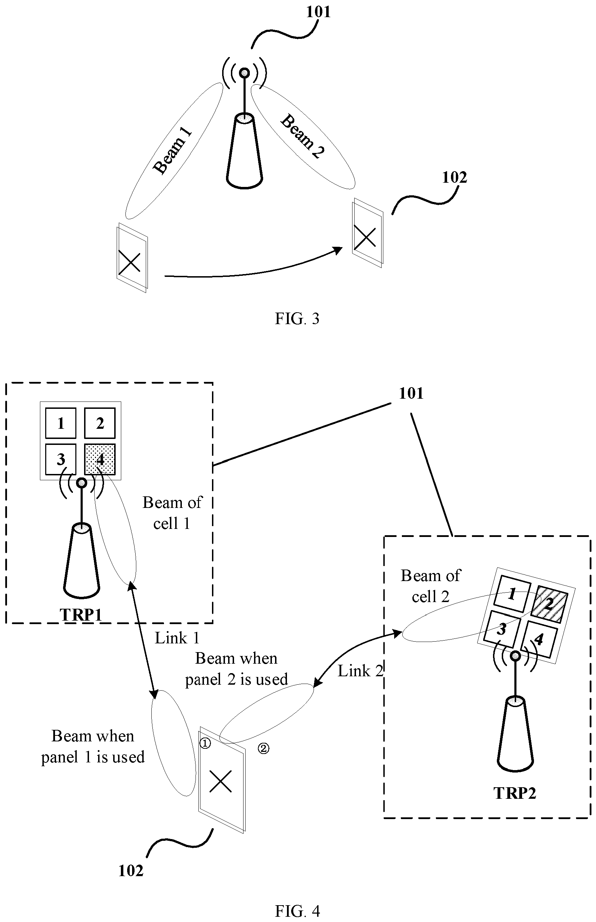

FIG. 3 is a schematic diagram of a scenario of the inter-cell beam management of the embodiment of this disclosure. As shown in FIG. 3, the network device 101 configures beam 1 on the serving cell (cell 1) and beam 2 on the non-serving cell (cell 2) for the terminal equipment 102. Due to movement of the terminal equipment 102, the network device 101 sequentially uses beam 1 on the serving cell and beam 2 on the non-serving cell to communicate with the terminal equipment 102.

For another example, for a scenario of inter-cell multi-TRP (mTRP), the network device provides services to the terminal equipment 102 via TRP-1 and TRP-2, which belong to different cells.

In the embodiments of this disclosure, a TRP is a part of a network device that receives signals from a terminal equipment and/or transmits signals to the terminal equipment. In multi-TRP (mTRP) operations, a serving cell may schedule the terminal equipment from two TRPs, providing better PDSCH coverage, reliability, and/or data rates. The two TRPs may belong to the same cell or different cells. For the multi-TRP, there are two different operating modes, namely single-DCI (downlink control information) and multi-DCI. For these two modes, within configuration provided by an RRC layer, control of uplink and downlink operations is performed by a physical layer and an MAC layer. In the single-DCI mode, the terminal equipment is scheduled by two TRPs identical DCI, and in the multi-DCI mode, the terminal equipment is scheduled by separate DCI of each TRP.

FIG. 4 is a schematic diagram of a scenario of inter-cell multi-TRP of the embodiment of this disclosure. As shown in FIG. 4, the network device 101 at least includes TRP1 and TRP2. The network device 101 operates with the terminal equipment 102 via TRP1 and TRP2. TRP1 and TRP2 belong to different intra-frequency cells under the same gNB DU; for example, TRP1 belongs to cell 1, TRP2 belongs to cell 2, and both cell 1 and cell 2 are supported by gNB DU1. TRP1 communicates with the terminal equipment 102 using panel 1 via link 1 by using a beam of cell 1, and TRP2 communicates with the terminal equipment 102 using panel 2 via link 2 by using a beam of cell 2.

In the scenarios shown in FIGs. 3 and 4, when the terminal equipment 102 receives downlink data on a dedicated channel by using a beam or a TRP and a PCI with which the beam or TRP is associated is different from a PCI of the serving cell (cell 1), the terminal equipment will not be able to simultaneously receive a short message and system information from the beam or TRP of the serving cell (cell 1). This may cause the terminal equipment 102 to miss updated system information and public alarm system information, resulting in that the serving cell (cell 1) is unable to provide services to the terminal equipment 102, and even the terminal equipment 102 is unable to receive emergency information, such as earthquake information and tsunamis information, etc.

Various implementations of the embodiments of this disclosure shall be described below with reference to the accompanying drawings. These implementations are illustrative only, and are not intended to limit this disclosure.

### Embodiment 1

The embodiments of this disclosure provide a method for providing system information, applicable to a network device, such as the network device 101 shown in FIGs. 1, 3 and 4.

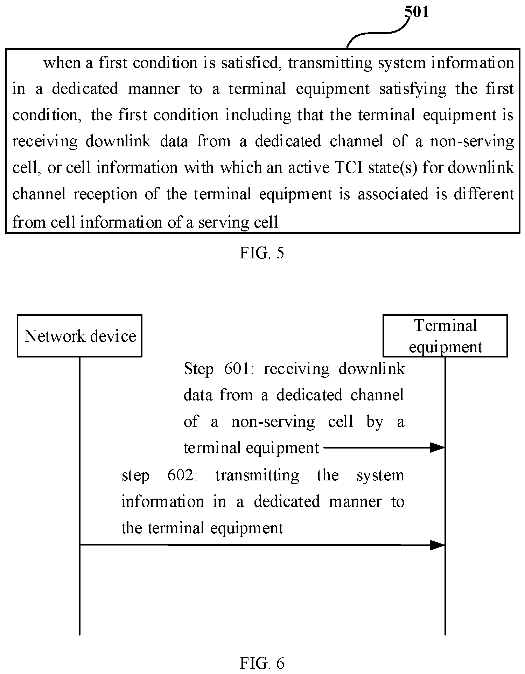

FIG. 5 is a schematic diagram of the method for providing system information of embodiment 1 of this disclosure. As shown in FIG. 5, the method includes:
step 501: when a first condition is satisfied, transmitting system information in a dedicated manner to a terminal equipment satisfying the first condition,
the first condition including that the terminal equipment is receiving downlink data from a dedicated channel of a non-serving cell, or cell information with which an active TCI state(s) for downlink channel reception of the terminal equipment is associated is different from cell information of a serving cell.

In the embodiments of this disclosure, for the terminal equipment satisfying the first condition, according to an existing mechanism, it will be unable to simultaneously receive a short message and system information from a beam or TRP of a serving cell. This may cause the terminal equipment to miss updated system information and public alarm system information, resulting in that the serving cell is unable to provide services to the terminal equipment, and even the terminal equipment is unable to receive emergency information, such as earthquake information and tsunamis information, etc. Therefore, for the terminal equipment satisfying the first condition, the system information is transmitted in a dedicated manner to the terminal equipment, so that the terminal equipment is able to simultaneously receive the system information from the beam or TRP of the serving cell, so that the serving cell is able to normally provide services to the terminal equipment, and the terminal equipment is able to timely obtain alarm information.

In addition, in the embodiment of this disclosure, the terminal equipment satisfying the first condition is, for example, a terminal equipment satisfying the first condition in a connected state.

In step 501, when the first condition is satisfied, the system information is transmitted in a dedicated manner to the terminal equipment satisfying the first condition, that is, the system information is transmitted in a dedicated manner to the terminal equipment satisfying the first condition.

In the embodiment of this disclosure, the system information may include at least one piece of the following information: an MIB from the serving cell; an SIB 1 from the serving cell; PWS information from the serving cell; and an SIB from the serving cell requested by the terminal equipment.

In the embodiments of this disclosure, the non-serving cell refers to a cell other than the serving cell.

In the first condition, the terminal equipment is receiving the downlink data from a dedicated channel of the non-serving cell. In the embodiment of this disclosure, the dedicated channel refers to a terminal-specific channel, such as a dedicated control channel (DCCH).

For example, the downlink channel includes at least one of a PDCCH and a PDSCH.

In the embodiments of this disclosure, that the terminal equipment is receiving downlink data from the dedicated channel of the non-serving cell may include that the terminal equipment is receiving the downlink data from a dedicated channel of a TRP or beam with cell information that is different from that of the serving cell.

In the embodiments of this disclosure, for the TRP with the cell information that is different from the cell information of the serving cell, it may include that the network device configures a control resource set pool (coreset pool), cell information associated therewith being different from the cell information of the serving cell; or, the network device configures a control resource set pool (coreset pool), and its associated reference signal is associated with cell information that is different from the cell information of the serving cell.

In the embodiments of this disclosure, for beams with cell information different from that of the serving cell, it may include that the network device configures a reference signal, and cell information associated with the reference signal is different from the cell information of the serving cell information; or, the network device configures a TCI state, and cell information associated with the TCI state is different from the cell information of the serving cell information; or, the network device configures a TCI state, and a reference signal associated with the TCI state is associated with cell information that is different from the cell information of the serving cell.

In the embodiments of this disclosure, the cell information may include at least one of a physical cell identity (PCI), a cell identity (CellIdentity), and a cell index (CellIndex).

For example, the network provides a group of cell identities (CellIdentity), and the cell index (CellIndex) is a sequence number of appearance of the cell identity. For example, a cell index of a cell that appears first is 0 (or 1), a cell index of a cell that appears second is 1 (or 2), and so on.

In the first condition, it may also be that cell information associated with an active TCI state(s) for downlink channel reception of the terminal equipment is different from the cell information of the serving cell.

In the embodiments of this disclosure, the TCI state may be a unified TCI state, or a TCI state with which PDCCH reception is associated, or a downlink TCI state.

In the embodiments of this disclosure, the cell information may include at least one of a physical cell identity (PCI), a cell identity (CellIdentity), and a cell index (CellIndex).

For example, the network provides a group of cell identities (CellIdentity), and the cell index (CellIndex) is a sequence number of appearance of the cell identity. For example, a cell index of a cell that appears first is 0 (or 1), a cell index of a cell that appears second is 1 (or 2), and so on.

In the embodiments of this disclosure, that the cell information associated with an active TCI state(s) for downlink channel reception of the terminal equipment is different from the cell information of the serving cell may include that the TCI state includes a reference signal different from the serving cell, or, the TCI state includes cell information that is different from the cell information of the serving cell.

In the embodiments of this disclosure, that the TCI state includes a reference signal different from the serving cell may include that the TCI state includes one or more QCL (quasi-colocation) types.

For example, the QCL type(s) apply QCL information, the QCL information including a reference signal of a non-serving cell, i.e. a reference signal of a cell other than the serving cell.

In the embodiments of this disclosure, that the TCI state includes cell information different from the cell information of the serving cell may include that the TCI state includes one or more QCL types.

For example, the QCL type(s) apply QCL information, the QCL information including cell information of a non-serving cell.

In the embodiments of this disclosure, the cell information may include at least one of a physical cell identity (PCI), a cell identity (CellIdentity), and a cell index (CellIndex).

For example, the network provides a group of cell identities (CellIdentity), and the cell index (CellIndex) is a sequence number of appearance of the cell identity. For example, a cell index of a cell that appears first is 0 (or 1), a cell index of a cell that appears second is 1 (or 2), and so on.

In step 501, for the terminal equipment, in addition to satisfying the first condition, further limiting conditions may be introduced, for example, when the first condition is satisfied and a second condition is satisfied, the system information is transmitted in the dedicated manner to the terminal equipment.

In the embodiments of this disclosure, the second condition may include at least one of the following condition that: the system information changes; the terminal equipment requests to provide the system information; a first timer expires; and after duration since the system information was last transmitted successfully , acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.

In the embodiments of this disclosure, the second condition includes that the system information changes, and that when the first condition is satisfied and a second condition is satisfied, the system information is transmitted in a dedicated manner to the terminal equipment satisfying the first condition, may include that:
at a first moment 11, the network device notifies the terminal equipment in an idle state, inactive state and connected state of the system information changes and/or warning information indications through short message(s), and transmits a system message corresponding to the warning information in the dedicated manner to the terminal equipment in the connected state satisfying the first condition; for example, the system message to which the warning information corresponds, if indicated by an ETWS/CMAS, is transmitted to the terminal equipment in the connected state satisfying the first condition in the dedicated manner;
   and/or,
at a second moment t2, the network device broadcasts updated system information, and transmits the updated system information in the dedicated manner to the terminal equipment in the connected state satisfying the first condition;
wherein the first moment t1 is within a modification period, and the second moment t2 is within a modification period after the modification period, that is, t1 is within an *n-th* modification period, and the second moment t2 is within an *(n+1)-th* modification period, or within an *(n+2)-th* modification period, or within an *(n+m)-th* modification period; where, n and m are natural numbers.

For example, the warning information indication includes an ETWS indication and/or a CMAS indication.

In the embodiments of this disclosure, terminal equipments in the idle, inactive and connected state may be terminal equipments in an RRC idle (RRC-IDLE), RRC inactive (RRC-INACTIVE) or RRC connected (RRC_CONNECTED) state.

In the embodiments of this disclosure, the second condition may further include that the terminal equipment request to provide system information, the terminal equipment requesting to provide system information including at least one of the following that: the terminal equipment is configured with an on-demand system information request by the network device; the terminal equipment requests on-demand system information from the network device; the terminal equipment is configured by the network device a request for transmitting system information in the dedicated manner; and the terminal equipment requests the network device to transmit system information in the dedicated manner.

In the embodiments of this disclosure, that the terminal equipment is configured with an on-demand system information request by the network device may include:
a field or IE indicating an on-demand system information request is included in an RRC reconfiguration message, such as including *onDemandSIB-Request* in an *RRCReconfiguration* message.

In the embodiments of this disclosure, that the terminal equipment is configured by the network device with a request for transmitting a request for system information in the dedicated manner may include: a new field or new IE is added in an RRC reconfiguration message.

For example, when the new field or new IE is present, or when the new field or new IE (a field or IE indicating an on-demand system information request) is included in the RRC reconfiguration message, the terminal equipment in the connected state is allowed to request system information on demand or the terminal equipment in the connected state is allowed to request the network device to transmit system information in a dedicated manner.

In the embodiments of this disclosure, that the terminal equipment requests the network device to transmit the system information in a dedicated manner may include that the terminal equipment in the connected state acquires an SIB or posSIB.

In the embodiments of this disclosure, that the terminal equipment requests the network device to transmit the system information in a dedicated manner may further include that when the second timer expires or is not configured or is not running, the terminal equipment initiates a dedicated system information request.

In the embodiments of this disclosure, that the second timer is not running includes other timer states than running, such as expiration or stop.

In the embodiments of this disclosure, the second timer is used to control and/or prohibit the terminal equipment from requesting the network device to transmit the system information in a dedicated manner.

For example, the second timer is timer T350, or may also be a timer other than T350.

A value of the second timer may be configured by the network, or may be a multiple of a value of the T350, such as 0.5 times, 1 time, or 2 times.

In the embodiments of this disclosure, that the terminal equipment requests the network device to transmit the system information in a dedicated manner may further include that the terminal equipment initiates the second timer. For example, if the network configures the second timer, the terminal equipment starts the second timer.

For example, upon receiving the system information transmitted in a dedicated manner or when the field or IE indicating the on-demand system information requests or the new field or IE (added in the RRC reconfiguration message) is set to be released, the terminal equipment stops the second timer.

For example, during operation of the second timer, the terminal equipment does not request the network device to transmit the system information in a dedicated manner.

In the embodiments of this disclosure, the second condition may further include that a first timer expires, the first timer being, for example, a valid timer.

In the embodiments of this disclosure, it may be that the first timer is started when the system information is successfully transmitted or when the terminal equipment starts to receive the downlink data from the dedicated channel of the non-serving cell or when the cell information with which the active TCI state of the downlink channel of the terminal equipment is associated is different from the cell information of the serving cell or when acknowledgement of successfully receiving the system information is received from the terminal equipment.

For example, the system information is transmitted to a terminal equipment via broadcast or a dedicated message.

In the embodiments of this disclosure, it may be that a time of the first timer is less than or equal to a second time threshold.

For example, the second time threshold may be set according to an actual situation. For example, if the second time threshold is 3 hours, the time of the first timer is, for example, 1 hour.

In the embodiments of this disclosure, the second condition may further include after duration since the system information was last transmitted successfully , acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.

In the embodiments of this disclosure, the first time threshold may be set according to an actual situation, for example, the first time threshold is 3 hours.

It can be seen from the above embodiment that when the terminal equipment is receiving the downlink data from the dedicated channel of the non-serving cell, or cell information with which the active TCI state is associated received by the downlink channel of the terminal equipment is different from the cell information of the serving cell, the system information is transmitted in a dedicated manner to the terminal equipment. Hence, the terminal equipment is able to obtain the system information from the serving cell in time from the beam or TRP of the non-serving cell, the serving cell is able to normally provide services to the terminal equipment, and the terminal equipment is able to acquire alarm information and take countermeasures, thereby avoiding personal and property losses.

### Embodiment 2

The embodiments of this disclosure provide a method for providing system information, applicable to a network device and a terminal equipment. This method corresponds to the method for providing system information applicable to a network device described in embodiment 1, and identical contents shall not be described herein any further.

FIG. 6 is a schematic diagram of the method for providing system information of embodiment 2 of this disclosure. As shown in FIG. 6, the method includes:
step 601: receiving downlink data from a dedicated channel of a non-serving cell by a terminal equipment; and
step 602: transmitting the system information in a dedicated manner to the terminal equipment.

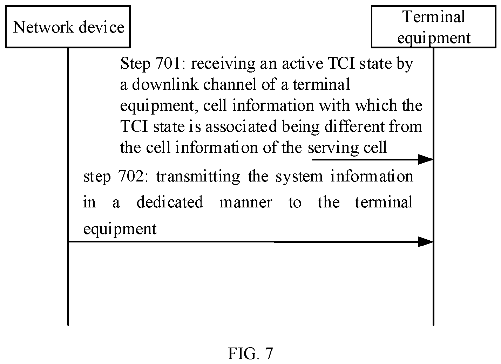

FIG. 7 is another schematic diagram of the method for providing system information of embodiment 2 of this disclosure. As shown in FIG. 7, the method includes:
step 701: receiving an active TCI state by a downlink channel of a terminal equipment, cell information with which the TCI state is associated being different from the cell information of the serving cell; and
step 702: transmitting the system information in a dedicated manner to the terminal equipment.

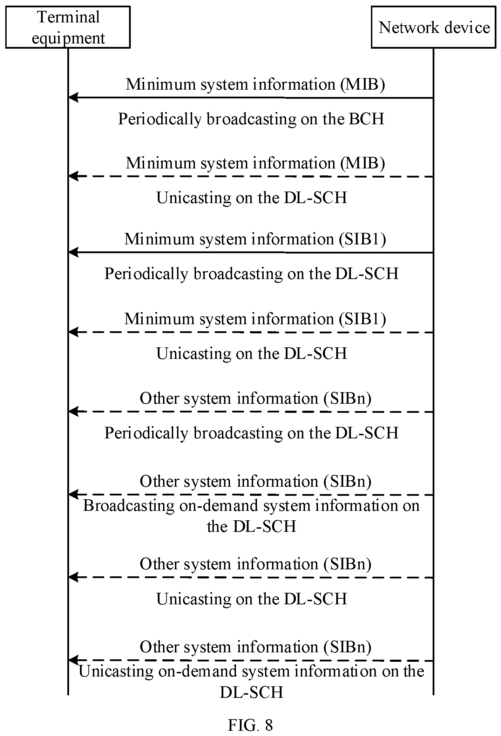

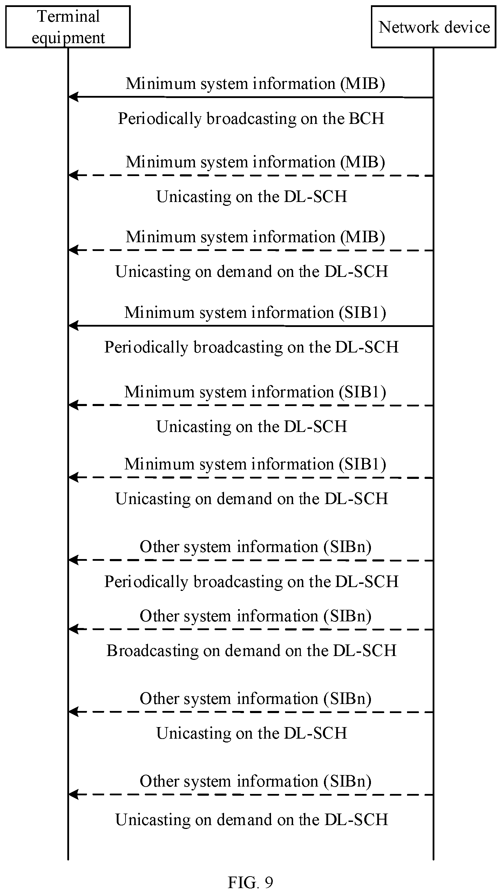

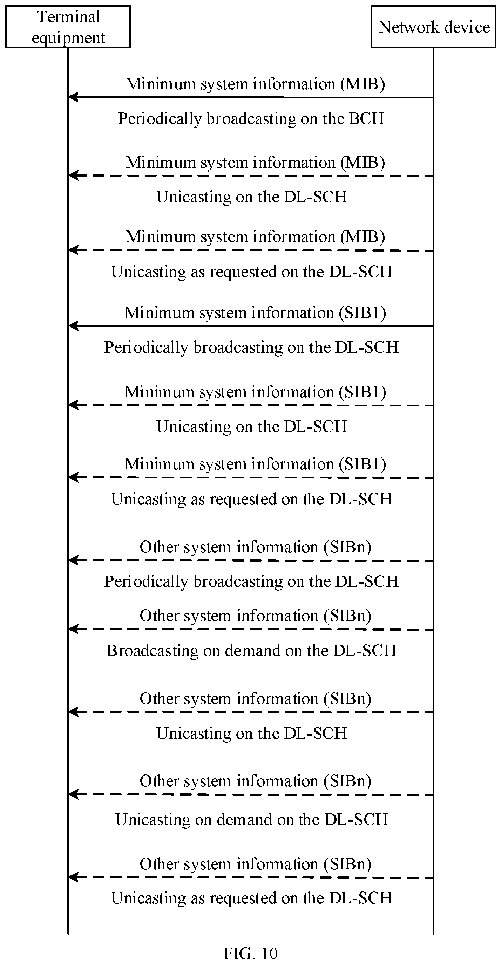

FIG. 8 is a schematic diagram of providing system information by the network device in embodiment 2 of this disclosure, FIG. 9 is another schematic diagram of providing system information by the network device in embodiment 2 of this disclosure, and FIG. 10 is a further schematic diagram of providing system information by the network device in embodiment 2 of this disclosure.

As shown in FIG. 8, compared to FIG. 2, which is an existing mechanism, in the embodiment of this disclosure, providing system information by the network device may further include: unicasting an MIB on a DL-SCH. This step is optional, and is denoted by dotted lines in FIG. 8.

As shown in FIG. 9, compared to FIG. 2, which is an existing mechanism, in the embodiment of this disclosure, providing system information by the network device may further include: unicasting an MIB on a DL-SCH; unicasting the MIB on demand on the DL-SCH; and unicasting SIB1 on demand on the DL-SCH. Method(s) for unicasting the MIB and/or SIB1 on the DL-SCH reuse(s) the method for unicasting the SIBn on demand on the DL-SCH. These steps are optional, and are denoted by dotted lines in FIG. 9.

As shown in FIG. 10, compared to FIG. 2, which is an existing mechanism, in the embodiment of this disclosure, providing system information by the network device may further include: unicasting an MIB on the DL-SCH; unicasting the MIB as requested on the DL-SCH; unicasting SIB1 as requested on the DL-SCH; and unicasting the SIBn as requested on the DL-SCH. Reference may be made to related descriptions in embodiment 1 for implementations of unicasting the MIB, SIB1 and SIBn as requested on the DL-SCH. These steps are optional, and are denoted by dotted lines in FIG. 10.

In the embodiments of this disclosure, reference may be made to related descriptions in embodiment 1 for implementations of the above steps, which shall not be repeated herein any further.

It can be seen from the above embodiment that when the terminal equipment is receiving the downlink data from the dedicated channel of the non-serving cell, or cell information with which the active TCI state is associated received by the downlink channel of the terminal equipment is different from the cell information of the serving cell, the system information is transmitted in a dedicated manner to the terminal equipment. Hence, the terminal equipment is able to obtain the system information from the serving cell in time from the beam or TRP of the non-serving cell, the serving cell is able to normally provide services to the terminal equipment, and the terminal equipment is able to acquire alarm information and take countermeasures, thereby avoiding personal and property losses.

### Embodiment 3

The embodiments of this disclosure provide an apparatus for providing system information, applicable to a network device. As a principle of the apparatus for solving problems is identical to that of the method in embodiment 1, reference may be made to the implementation of the method in embodiment 1 for implementation of the apparatus, with identical contents being not going to be repeated herein any further.

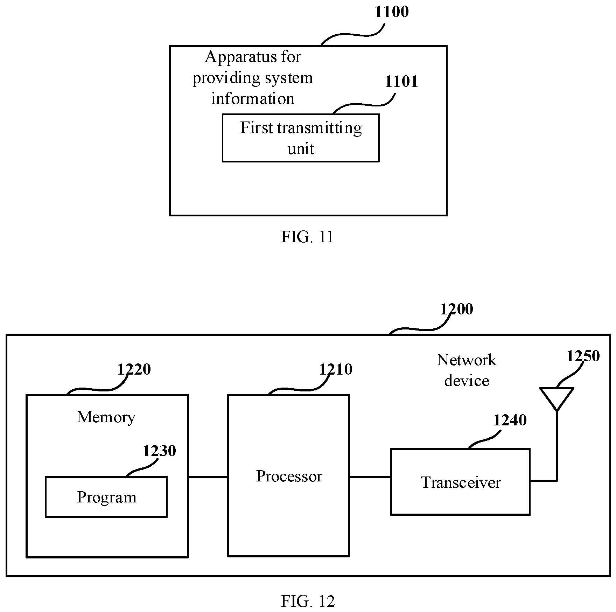

FIG. 11 is a schematic diagram of the apparatus for providing system information in embodiment 3 of this disclosure. As shown in FIG. 11, an apparatus 1100 includes:
a first transmitting unit 1101 configured to, when a first condition is satisfied, transmit system information in a dedicated manner to a terminal equipment satisfying the first condition,
the first condition including that the terminal equipment is receiving downlink data from a dedicated channel of a non-serving cell, or cell information with which an active TCI state(s) for downlink channel reception of the terminal equipment is associated is different from cell information of a serving cell.

That is, when the first condition is satisfied, the first transmitting unit 1101 transmits the system information in a dedicated manner to the terminal equipment satisfying the first condition.

In the embodiments of this disclosure, the system information may include at least one piece of the following information: an MIB from the serving cell; an SIB1 from the serving cell; PWS information from the serving cell; and an SIB from the serving cell requested by the terminal equipment.

In the embodiments of this disclosure, it may also be that when the first condition is satisfied and a second condition is satisfied, the system information is transmitted to the terminal equipment satisfying the first condition in the dedicated manner.

In the embodiments of this disclosure, the second condition may include at least one of the following conditions that: the system information changes; the terminal equipment requests to provide the system information; a first timer expires; and after duration since the system information was last transmitted successfully , acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.

In the embodiments of this disclosure, for example, the second condition includes that the system information changes, and that when the first condition is satisfied and a second condition is satisfied, the system information is transmitted in a dedicated manner to the terminal equipment satisfying the first condition, includes that: at a first moment, the network device notifies the terminal equipment in an idle state, inactive state and connected state of the system information changes and/or warning information indications through short message(s), and transmits a system message corresponding to the warning information in the dedicated manner to the terminal equipment in the connected state satisfying the first condition; and/or, at a second moment, the network device broadcasts updated system information, and transmits the updated system information in the dedicated manner to the terminal equipment in the connected state satisfying the first condition; wherein the first moment is within a modification period, and the second moment is within a modification period after the modification period.

In the embodiments of this disclosure, that the terminal equipment requests to provide system information includes at least one of the following that: the terminal equipment is configured with an on-demand system information request by the network device; the terminal equipment requests on-demand system information from the network device; the terminal equipment is configured by the network device a request for transmitting system information in the dedicated manner; and the terminal equipment requests the network device to transmit system information in the dedicated manner.

In the embodiments of this disclosure, that the terminal equipment is configured with an on-demand system information request by the network device may include: a field or IE indicating an on-demand system information request is included in an RRC reconfiguration message.

In the embodiments of this disclosure, that the terminal equipment is configured with an on-demand system information request by the network device may include: a new field or new IE is added in an RRC reconfiguration message.

For example, when the new field or the new IE is present, or when the field or the IE is included in the RRC reconfiguration message, the terminal equipment in the connected state is allowed to request system information on demand or the terminal equipment in the connected state is allowed to request the network device to transmit system information in the dedicated manner.

In the embodiment of this disclosure, that the terminal equipment requests the network device to transmit the system information in the dedicated manner may include that: the terminal equipment in the connected state acquires an SIB or posSIB.

In the embodiments of this disclosure, that the terminal equipment requests the network device to transmit the system information in the dedicated manner may further include that: when a second timer expires or is not configured or is not running, the terminal equipment initiates a dedicated system information request.

In the embodiments of this disclosure, that the terminal equipment requests the network device to transmit the system information in the dedicated manner further includes that: the terminal equipment starts the second timer.

For example, the terminal equipment stops the second timer when the system information transmitted in the dedicated manner is received or when the field or IE indicating an on-demand system information request or the new field or the new IE is set to be released.

For example, when the second timer is running, the terminal equipment does not request the network device to transmit the system information in the dedicated manner.

In the embodiments of this disclosure, the second timer is used to control and/or prohibit the terminal equipment from requesting the network device to transmit the system information in a dedicated manner.

In the embodiments of this disclosure, for example, the first timer is started when the system information is successfully transmitted or when the terminal equipment starts to receive the downlink data from the dedicated channel of the non-serving cell or when the cell information with which the active TCI state of the downlink channel of the terminal equipment is associated is different from the cell information of the serving cell or when acknowledgement of successfully receiving the system information is received from the terminal equipment.

For example, the system information is transmitted to a terminal equipment via broadcast or a dedicated message.

In the embodiments of this disclosure, a time of the first timer may be less than or equal to a second time threshold.

In the embodiments of this disclosure, that the terminal equipment is receiving downlink data from a dedicated channel of a non-serving cell includes that: the terminal equipment is receiving downlink data from a dedicated channel of a TRP or beam with cell information different from the cell information of the serving cell.

For example, for the TRP with cell information different from the cell information of the serving cell, it may include that: the network device configures a control resource set pool (coreset pool), cell information associated with the coreset pool being different from the cell information of the serving cell; or, the network device configures a control resource set pool (coreset pool), a reference signal associated with the coreset pool being associated with cell information, the cell information being different from the cell information of the serving cell.

For example, for the beam with cell information different from the cell information of the serving cell, it may include that: the network device configures a reference signal, cell information associated with the reference signal being different from the cell information of the serving cell; or, the network device configures a TCI state, cell information associated with the TCI state being different from the cell information of the serving cell; or, the network device configures a TCI state, a reference signal associated with the TCI state being associated with cell information, the cell information being different from the cell information of the serving cell.

In the embodiments of this disclosure, the TCI state may be a unified TCI state, or a TCI state with which PDCCH reception is associated, or a downlink TCI state.

In the embodiments of this disclosure, that cell information with which an active TCI state(s) for downlink channel reception of the terminal equipment is associated is different from cell information of the serving cell may include that: the TCI state includes a reference signal different from that of the serving cell; or, the TCI state includes cell information different from that of the serving cell.

In the embodiments of this disclosure, that the TCI state includes a reference signal different from the serving cell may include that: the TCI state includes one or more QCL types.

For example, the QCL type(s) apply QCL information, the QCL information including a reference signal of a non-serving cell.

In the embodiments of this disclosure, that the TCI state includes cell information different from the cell information of the serving cell may include that: the TCI state includes one or more QCL types.

For example, the QCL type(s) apply QCL information, the QCL information including cell information of a non-serving cell.

In the embodiments of this disclosure, the cell information may include at least one of a physical cell identity (PCI), a cell identity (CellIdentity), and a cell index (CellIndex).

It can be seen from the above embodiment that when the terminal equipment is receiving the downlink data from the dedicated channel of the non-serving cell, or cell information with which the active TCI state is associated received by the downlink channel of the terminal equipment is different from the cell information of the serving cell, the system information is transmitted in a dedicated manner to the terminal equipment. Hence, the terminal equipment is able to obtain the system information from the serving cell in time from the beam or TRP of the non-serving cell, the serving cell is able to normally provide services to the terminal equipment, and the terminal equipment is able to acquire alarm information and take countermeasures, thereby avoiding personal and property losses.

### Embodiment 4

The embodiments of this disclosure provide a network device, including the apparatus for providing system information as described in embodiment 3.

FIG. 12 is a block diagram of a systematic structure of the network device of embodiment 4 of this disclosure. As shown in FIG. 12, a network device 1200 may include a processor 1210 and a memory 1220, the memory 1220 being coupled to the processor 1210. The memory 1220 may store various data, and furthermore, it may store a program 1230 for information processing, and execute the program 1230 under control of the processor 1210, so as to receive various information transmitted by a terminal equipment, and transmit various information to the terminal equipment.

In one implementation, the functions of the apparatus for providing system information may be integrated into the processor 1210. The processor 1210 may be configured to, when a first condition is satisfied, transmit system information in a dedicated manner to a terminal equipment satisfying the first condition, the first condition including that the terminal equipment is receiving downlink data from a dedicated channel of a non-serving cell, or cell information with which an active TCI state(s) for downlink channel reception of the terminal equipment is associated is different from cell information of a serving cell.

In another implementation, the apparatus for providing system information and the processor 1210 may be configured separately; for example, the apparatus for providing system information may be configured as a chip connected to the processor 1210, and the functions of the apparatus for providing system information are executed under control of the processor 1210.

Furthermore, as shown in FIG. 12, the network device 1200 may include a transceiver 1240, and an antenna 1250, etc. Functions of the above components are similar to those in the prior art, and shall not be described herein any further. It should be noted that the network device 1200 does not necessarily include all the parts shown in FIG. 12, and furthermore, the network device 1200 may include parts not shown in FIG. 12, and the related art may be referred to.

It can be seen from the above embodiment that when the terminal equipment is receiving the downlink data from the dedicated channel of the non-serving cell, or cell information with which the active TCI state is associated received by the downlink channel of the terminal equipment is different from the cell information of the serving cell, the system information is transmitted in a dedicated manner to the terminal equipment. Hence, the terminal equipment is able to obtain the system information from the serving cell in time from the beam or TRP of the non-serving cell, the serving cell is able to normally provide services to the terminal equipment, and the terminal equipment is able to acquire alarm information and take countermeasures, thereby avoiding personal and property losses.

### Embodiment 5

The embodiments of this disclosure provide a communication system, including the network device described in embodiment 4 and a terminal equipment, and reference may be made to the disclosure contained in embodiments 1 and 4 for details.

For example, reference may be made to FIG. 1 for a structure of the communication system. As shown in FIG. 1, the communication system 100 includes a network device 101 and a terminal equipment 102. The network device 101 may be identical to the network device described in embodiment 4, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 11 may either correspond to software modules of procedures of a computer program, or correspond to hardware modules. Such software modules may respectively correspond to the steps shown in FIG. 5. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 11 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 11 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Supplement I

1. An apparatus for providing system information, applicable to a network device, the apparatus including:
   a first transmitting unit configured to, when a first condition is satisfied, transmit system information in a dedicated manner to a terminal equipment satisfying the first condition,
   the first condition including that the terminal equipment is receiving downlink data from a dedicated channel of a non-serving cell, or cell information with which an active TCI state(s) for downlink channel reception of the terminal equipment is associated is different from cell information of a serving cell.
2. The apparatus according to supplement 1, wherein the system information includes at least one piece of the following information:
   an MIB from the serving cell;
   an SIB1 from the serving cell;
   PWS information from the serving cell; and
   an SIB from the serving cell requested by the terminal equipment.
3. The apparatus according to supplement 1 or 2, wherein,
   when the first condition is satisfied and a second condition is satisfied, the system information is transmitted to the terminal equipment satisfying the first condition in the dedicated manner.
4. The apparatus according to supplement 3, wherein the second condition includes at least one of the following conditions that:
   the system information changes;
   the terminal equipment requests to provide the system information;
   a first timer expires; and
   after duration since the system information was last transmitted successfully , acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.
5. The apparatus according to supplement 4, wherein the second condition includes that the system information changes, and that when the first condition is satisfied and a second condition is satisfied, the system information is transmitted in a dedicated manner to the terminal equipment satisfying the first condition, includes that:
   at a first moment, the network device notifies the terminal equipment in an idle state, inactive state and connected state of the system information changes and/or warning information indications through short message(s), and transmits a system message corresponding to the warning information in the dedicated manner to the terminal equipment in the connected state satisfying the first condition; and/or,
   at a second moment, the network device broadcasts updated system information, and transmits the updated system information in the dedicated manner to the terminal equipment in the connected state satisfying the first condition;
   wherein the first moment is within a modification period, and the second moment is within a modification period after the modification period.
6. The apparatus according to supplement 4, wherein that the terminal equipment requests to provide system information includes at least one of the following that:
   the terminal equipment is configured with an on-demand system information request by the network device;
   the terminal equipment requests on-demand system information from the network device;
   the terminal equipment is configured by the network device a request for transmitting system information in the dedicated manner; and
   the terminal equipment requests the network device to transmit system information in the dedicated manner.
7. The apparatus according to supplement 6, wherein,
   that the terminal equipment is configured with an on-demand system information request by the network device includes:
   a field or IE indicating an on-demand system information request is included in an RRC reconfiguration message, and/or,
   that the terminal equipment is configured by the network device with a request for transmitting a request for system information in the dedicated manner includes:
      a new field or new IE is added in an RRC reconfiguration message.
8. The apparatus according to supplement 7, wherein,
   when the new field or the new IE is present, or when the field or IE is included in the RRC reconfiguration message, the terminal equipment in the connected state is allowed to request system information on demand or the terminal equipment in the connected state is allowed to request the network device to transmit system information in the dedicated manner.
9. The apparatus according to supplement 6, wherein that the terminal equipment requests the network device to transmit the system information in the dedicated manner includes that:
   the terminal equipment in the connected state acquires an SIB or posSIB.
10. The apparatus according to supplement 6 or 9, wherein that the terminal equipment requests the network device to transmit the system information in the dedicated manner further includes that:
   when a second timer expires or is not configured or is not running, the terminal equipment initiates a dedicated system information request.
11. The apparatus according to supplement 6 or 9 or 10, wherein that the terminal equipment requests the network device to transmit the system information in the dedicated manner further includes that:
   the terminal equipment starts the second timer.
12. The apparatus according to supplement 10 or 11, wherein,
   the terminal equipment stops the second timer when the system information transmitted in the dedicated manner is received or when the field or IE indicating an on-demand system information request or the new field or the new IE is set to be released.
13. The apparatus according to any one of supplements 10-12, wherein,
   when the second timer is running, the terminal equipment does not request the network device to transmit the system information in the dedicated manner.
14. The apparatus according to any one of supplements 10-13, wherein,
   the second timer is used to control and/or prohibit the terminal equipment from requesting the network device to transmit the system information in a dedicated manner.
15. The apparatus according to supplement 4, wherein,
   the first timer is started when the system information is successfully transmitted or when the terminal equipment starts to receive the downlink data from the dedicated channel of the non-serving cell or when the cell information with which the active TCI state of the downlink channel of the terminal equipment is associated is different from the cell information of the serving cell or when acknowledgement of successfully receiving the system information is received from the terminal equipment.
16. The apparatus according to supplement 15, wherein,
   the system information is transmitted to a terminal equipment via broadcast or a dedicated message.
17. The apparatus according to supplement 4, wherein,
   a time of the first timer is less than or equal to a second time threshold.
18. The apparatus according to supplement 1, wherein that the terminal equipment is receiving downlink data from a dedicated channel of a non-serving cell includes that:
   the terminal equipment is receiving downlink data from a dedicated channel of a TRP or beam with cell information different from the cell information of the serving cell.
19. The apparatus according to supplement 18, wherein for the TRP with cell information different from the cell information of the serving cell, it includes that:
   the network device configures a control resource set pool (coreset pool), cell information associated with the coreset pool being different from the cell information of the serving cell; or,
   the network device configures a control resource set pool (coreset pool), a reference signal associated with the coreset pool being associated with cell information, the cell information being different from the cell information of the serving cell.
20. The apparatus according to supplement 18, wherein for the beam with cell information different from the cell information of the serving cell, it includes that:
   the network device configures a reference signal, cell information associated with the reference signal being different from the cell information of the serving cell; or,
   the network device configures a TCI state, cell information associated with the TCI state being different from the cell information of the serving cell; or,
   the network device configures a TCI state, a reference signal associated with the TCI state being associated with cell information, the cell information being different from the cell information of the serving cell.
21. The apparatus according to any one of supplements 1, 4, 5 and 20, wherein, the TCI state is a unified TCI state, or a TCI state with which PDCCH reception is associated, or a downlink TCI state.
22. The apparatus according to supplement 1 or 21, wherein that cell information with which an active TCI state(s) for downlink channel reception of the terminal equipment is associated is different from cell information of the serving cell includes that:
   the TCI state includes a reference signal different from that of the serving cell; or,
   the TCI state includes cell information different from that of the serving cell.
23. The apparatus according to supplement 22, wherein that the TCI state includes a reference signal different from the serving cell may include that:
   the TCI state includes one or more QCL types.
24. The apparatus according to supplement 23, wherein,
   the QCL type(s) apply QCL information, the QCL information including a reference signal of a non-serving cell.
25. The apparatus according to supplement 22, wherein that the TCI state includes cell information different from the cell information of the serving cell includes that:
   the TCI state includes one or more QCL types.
26. The apparatus according to supplement 25, wherein,
   the QCL type(s) apply QCL information, the QCL information including cell information of a non-serving cell.
27. The apparatus according to any one of supplements 1-26, wherein,
   the cell information includes at least one of a physical cell identity (PCI), a cell identity (CellIdentity) and a cell index.
28. A network device, including the apparatus as described in any one of supplements 1-27.
29. A communication system, including the network device as described in supplement 28 and a terminal equipment.

### Supplement II

1. A method for providing system information, applicable to a network device, the method including:
   when a first condition is satisfied, transmitting system information in a dedicated manner to a terminal equipment satisfying the first condition,
   the first condition including that the terminal equipment is receiving downlink data from a dedicated channel of a non-serving cell, or cell information with which an active TCI state(s) for downlink channel reception of the terminal equipment is associated is different from cell information of a serving cell.
2. The method according to supplement 1, wherein the system information includes at least one piece of the following information:
   an MIB from the serving cell;
   an SIB1 from the serving cell;
   PWS information from the serving cell; and
   an SIB from the serving cell requested by the terminal equipment.
3. The method according to supplement 1 or 2, wherein when a first condition is satisfied, transmitting system information in a dedicated manner to a terminal equipment satisfying the first condition, includes:
   when the first condition is satisfied and a second condition is satisfied, transmitting the system information to the terminal equipment satisfying the first condition in the dedicated manner.
4. The method according to supplement 3, wherein the second condition includes at least one of the following conditions that:
   the system information changes;
   the terminal equipment requests to provide the system information;
   a first timer expires; and
   after duration since the system information was last transmitted successfully , acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.
5. The method according to supplement 4, wherein the second condition includes that the system information changes, and that when the first condition is satisfied and a second condition is satisfied, the system information is transmitted in a dedicated manner to the terminal equipment satisfying the first condition, includes that:
   at a first moment, the network device notifies the terminal equipment in an idle state, inactive state and connected state of the system information changes and/or warning information indications through short message(s), and transmits a system message corresponding to the warning information in the dedicated manner to the terminal equipment in the connected state satisfying the first condition; and/or,
   at a second moment, the network device broadcasts updated system information, and transmits the updated system information in the dedicated manner to the terminal equipment in the connected state satisfying the first condition;
   wherein the first moment is within a modification period, and the second moment is within a modification period after the modification period.
6. The method according to supplement 4, wherein that the terminal equipment requests to provide system information includes at least one of the following that:
   the terminal equipment is configured with an on-demand system information request by the network device;
   the terminal equipment requests on-demand system information from the network device;
   the terminal equipment is configured by the network device a request for transmitting system information in the dedicated manner; and
   the terminal equipment requests the network device to transmit system information in the dedicated manner.
7. The method according to supplement 6, wherein,
   that the terminal equipment is configured with an on-demand system information request by the network device includes:
   a field or IE indicating an on-demand system information request is included in an RRC reconfiguration message, and/or,
   that the terminal equipment is configured by the network device with a request for transmitting a request for system information in the dedicated manner includes:
      a new field or new IE is added in an RRC reconfiguration message.
8. The method according to supplement 7, wherein,
   when the new field or the new IE is present, or when the field or IE is included in the RRC reconfiguration message, the terminal equipment in the connected state is allowed to request system information on demand or the terminal equipment in the connected state is allowed to request the network device to transmit system information in the dedicated manner.
9. The method according to supplement 6, wherein that the terminal equipment requests the network device to transmit the system information in the dedicated manner includes that:
   the terminal equipment in the connected state acquires an SIB or posSIB.
10. The method according to supplement 6 or 9, wherein that the terminal equipment requests the network device to transmit the system information in the dedicated manner further includes that:
   when a second timer expires or is not configured or is not running, the terminal equipment initiates a dedicated system information request.
11. The method according to supplement 6 or 9 or 10, wherein that the terminal equipment requests the network device to transmit the system information in the dedicated manner further includes that:
   the terminal equipment starts the second timer.
12. The method according to supplement 10 or 11, wherein,
   the terminal equipment stops the second timer when the system information transmitted in the dedicated manner is received or when the field or IE indicating an on-demand system information request or the new field or the new IE is set to be released.
13. The method according to any one of supplements 10-12, wherein,
   when the second timer is running, the terminal equipment does not request the network device to transmit the system information in the dedicated manner.
14. The method according to any one of supplements 10-13, wherein,
   the second timer is used to control and/or prohibit the terminal equipment from requesting the network device to transmit the system information in a dedicated manner.
15. The method according to supplement 4, wherein,
   the first timer is started when the system information is successfully transmitted or when the terminal equipment starts to receive the downlink data from the dedicated channel of the non-serving cell or when the cell information with which the active TCI state of the downlink channel of the terminal equipment is associated is different from the cell information of the serving cell or when acknowledgement of successfully receiving the system information is received from the terminal equipment.
16. The method according to supplement 15, wherein,
   the system information is transmitted to a terminal equipment via broadcast or a dedicated message.
17. The method according to supplement 4, wherein,
   a time of the first timer is less than or equal to a second time threshold.
18. The method according to supplement 1, wherein that the terminal equipment is receiving downlink data from a dedicated channel of a non-serving cell includes that:
   the terminal equipment is receiving downlink data from a dedicated channel of a TRP or beam with cell information different from the cell information of the serving cell.
19. The method according to supplement 18, wherein for the TRP with cell information different from the cell information of the serving cell, it includes that:
   the network device configures a control resource set pool (coreset pool), cell information associated with the coreset pool being different from the cell information of the serving cell; or,
   the network device configures a control resource set pool (coreset pool), a reference signal associated with the coreset pool being associated with cell information, the cell information being different from the cell information of the serving cell.
20. The method according to supplement 18, wherein for the beam with cell information different from the cell information of the serving cell, it includes that:
   the network device configures a reference signal, cell information associated with the reference signal being different from the cell information of the serving cell; or,
   the network device configures a TCI state, cell information associated with the TCI state being different from the cell information of the serving cell; or,
   the network device configures a TCI state, a reference signal associated with the TCI state being associated with cell information, the cell information being different from the cell information of the serving cell.
21. The method according to any one of supplements 1, 4, 5 and 20, wherein,
   the TCI state is a unified TCI state, or a TCI state with which PDCCH reception is associated, or a downlink TCI state.
22. The method according to supplement 1 or 21, wherein that cell information with which an active TCI state(s) for downlink channel reception of the terminal equipment is associated is different from cell information of the serving cell includes that:
   the TCI state includes a reference signal different from that of the serving cell; or,
   the TCI state includes cell information different from that of the serving cell.
23. The method according to supplement 22, wherein that the TCI state includes a reference signal different from the serving cell may include that:
   the TCI state includes one or more QCL types.
24. The method according to supplement 23, wherein,
   the QCL type(s) apply QCL information, the QCL information including a reference signal of a non-serving cell.
25. The method according to supplement 22, wherein that the TCI state includes cell information different from the cell information of the serving cell includes that:
   the TCI state includes one or more QCL types.
26. The method according to supplement 25, wherein,
   the QCL type(s) apply QCL information, the QCL information including cell information of a non-serving cell.
27. The method according to any one of supplements 1-26, wherein,
   the cell information includes at least one of a physical cell identity (PCI), a cell identity (CellIdentity) and a cell index.

## Claims

1. An apparatus for providing system information, applicable to a network device, the apparatus comprising:
a first transmitting unit configured to, when a first condition is satisfied, transmit system information in a dedicated manner to a terminal equipment satisfying the first condition,
the first condition comprising that the terminal equipment is receiving downlink data from a dedicated channel of a non-serving cell, or cell information with which active TCI state(s) for downlink channel reception of the terminal equipment is associated is different from cell information of a serving cell.

2. The apparatus according to claim 1, wherein the system information comprises at least one piece of the following information:
an MIB from the serving cell;
an SIB1 from the serving cell;
PWS information from the serving cell; and
an SIB from the serving cell requested by the terminal equipment.

3. The apparatus according to claim 1, wherein,
when the first condition is satisfied and a second condition is satisfied, the system information is transmitted to the terminal equipment satisfying the first condition in the dedicated manner.

4. The apparatus according to claim 3, wherein the second condition comprises at least one of the following conditions that:
the system information changes;
the terminal equipment requests to provide the system information;
a first timer expires; and
after duration since the system information was last transmitted successfully, acknowledgement of successful reception of the system information from the terminal equipment was last received successfully or the terminal equipment received downlink data from the dedicated channel of the non-serving cell or the cell information with which the active TCI state is associated is different from the cell information of the serving cell reaches a first time threshold.

5. The apparatus according to claim 4, wherein the second condition comprises that the system information changes, and that when the first condition is satisfied and a second condition is satisfied, the system information is transmitted in a dedicated manner to the terminal equipment satisfying the first condition, comprises that:
at a first moment, the network device notifies the terminal equipment in an idle state, inactive state and connected state of the system information changes and/or warning information indications through short message(s), and transmits a system message corresponding to the warning information in the dedicated manner to the terminal equipment in the connected state satisfying the first condition; and/or,
at a second moment, the network device broadcasts updated system information, and transmits the updated system information in the dedicated manner to the terminal equipment in the connected state satisfying the first condition;
wherein the first moment is within a modification period, and the second moment is within a modification period after the modification period.

6. The apparatus according to claim 4, wherein that the terminal equipment requests to provide system information comprises at least one of the following that:
the terminal equipment is configured with an on-demand system information request by the network device;
the terminal equipment requests on-demand system information from the network device;
the terminal equipment is configured by the network device a request for transmitting system information in the dedicated manner; and
the terminal equipment requests the network device to transmit system information in the dedicated manner.

7. The apparatus according to claim 6, wherein,
that the terminal equipment is configured with an on-demand system information request by the network device comprises:
a field or IE indicating an on-demand system information request is included in an RRC reconfiguration message, and/or,
that the terminal equipment is configured by the network device with a request for transmitting a request for system information in the dedicated manner comprises:
a new field or new IE is added in an RRC reconfiguration message.

8. The apparatus according to claim 7, wherein,
when the new field or the new IE is present, or when the field or the IE is included in the RRC reconfiguration message, the terminal equipment in the connected state is allowed to request system information on demand or the terminal equipment in the connected state is allowed to request the network device to transmit system information in the dedicated manner.

9. The apparatus according to claim 6, wherein that the terminal equipment requests the network device to transmit the system information in the dedicated manner further comprises that:
when a second timer expires or is not configured or is not running, the terminal equipment initiates a dedicated system information request.

10. The apparatus according to claim 6, wherein that the terminal equipment requests the network device to transmit the system information in the dedicated manner further comprises that:
the terminal equipment starts the second timer.

11. The apparatus according to claim 10, wherein,
the terminal equipment stops the second timer when the system information transmitted in the dedicated manner is received or when the field or IE indicating an on-demand system information request or the new field or the new IE is set to be released.

12. The apparatus according to claim 10, wherein,
when the second timer is running, the terminal equipment does not request the network device to transmit the system information in the dedicated manner.

13. The apparatus according to claim 4, wherein,
the first timer is started when the system information is successfully transmitted or when the terminal equipment starts to receive the downlink data from the dedicated channel of the non-serving cell or when the cell information with which the active TCI state of the downlink channel of the terminal equipment is associated is different from the cell information of the serving cell or when acknowledgement of successfully receiving the system information is received from the terminal equipment.

14. The apparatus according to claim 1, wherein that the terminal equipment is receiving downlink data from a dedicated channel of a non-serving cell comprises that:
the terminal equipment is receiving downlink data from a dedicated channel of a TRP or beam with cell information different from the cell information of the serving cell.

15. The apparatus according to claim 14, wherein for the TRP with cell information different from the cell information of the serving cell,
the network device configures a control resource set pool (coreset pool), cell information associated with the coreset pool being different from the cell information of the serving cell; or,
the network device configures a control resource set pool (coreset pool), a reference signal associated with the coreset pool being associated with cell information, the cell information being different from the cell information of the serving cell.

16. The apparatus according to claim 14, wherein for the beam with cell information different from the cell information of the serving cell,
the network device configures a reference signal, cell information associated with the reference signal being different from the cell information of the serving cell; or,
the network device configures a TCI state, cell information associated with the TCI state being different from the cell information of the serving cell; or,
the network device configures a TCI state, a reference signal associated with the TCI state being associated with cell information, the cell information being different from the cell information of the serving cell.

17. The apparatus according to claim 1, wherein that cell information with which an active TCI state(s) for downlink channel reception of the terminal equipment is associated is different from cell information of the serving cell comprises that:
the TCI state comprises a reference signal different from that of the serving cell; or,
the TCI state comprises cell information different from that of the serving cell.

18. The apparatus according to claim 1, wherein,
the cell information comprises at least one of a physical cell identity (PCI), a cell identity (CellIdentity) and a cell index.

19. A network device, comprising the apparatus as claimed in claim 1.

20. A communication system, comprising the network device as claimed in claim 19 and a terminal equipment.
